# EUROPEAN PATENT SPECIFICATION

(11) **EP 4 573 606 B1**
(45) Date of publication and mention of the grant of the patent: **18.11.2026**
(21) Application number: 23855260.8
(22) Date of filing: 17.08.2023
(51) Int. Cl.: H01M 4/00, H01G 11/24, H01G 11/28, H01G 11/40, H01G 11/48, H01G 11/68, H01G 11/86, H01M 10/00

(54) **MELLITIC ACID DOPED POLYPYRROLE COATED CARBON FELT ELECTRODE AND THE PREPARATION METHOD THEREOF**
MIT POLYPYRROL BESCHICHTETE, MIT MELLINSÄURE DOTIERTE KOHLENSTOFFFILZELEKTRODE UND HERSTELLUNGSVERFAHREN DAFÜR
ÉLECTRODE EN FEUTRE DE CARBONE DOPÉE À L'ACIDE MELLITIQUE REVÊTUE DE POLYPYRROLE ET SON PROCÉDÉ DE PRÉPARATION

(30) Priority: 18.08.2022 TR 202213087
(43) Date of publication of application: 25.06.2025
(73) Proprietor: Yildiz Teknik Universitesi, Esenler, Istanbul (TR); Istanbul Universitesi-Cerrahpasa Rektorlugu, Avcilar, Istanbul (TR)
(72) Inventor: SAHIN, Yucel, Istanbul (TR); ARVAS, Melih Besir, Istanbul (TR); YAZAR AYDOGAN, Sibel, Istanbul (TR); ARVAS, Busra, Istanbul (TR)
(74) Representative: Sevinç, Cenk
(86) International application number: PCT/TR2023/050820
(87) International publication number: WO 2024/039349

(56) References cited:
- CN-A- 110 164 710
- CN-B- 102 731 970
- US-A- 4 442 185
- US-A1- 2006 033 225
- US-A1- 2014 017 557
- US-A1- 2019 393 394
- US-A1- 2021 119 100
- PARAYANGATTIL JYOTHIBASU JINCY, CHEN MING-ZHU, LEE RONG-HO: "Polypyrrole/Carbon Nanotube Freestanding Electrode with Excellent Electrochemical Properties for High-Performance All-Solid-State Supercapacitors", ACS OMEGA, vol. 5, no. 12, 31 March 2020 (2020-03-31), US , pages 6441 - 6451, XP093145087, ISSN: 2470-1343, DOI: 10.1021/acsomega.9b04029

## Description

### Technical Field of the Invention

The invention relates to a mellitic acid doped, polypyrrole coated environmentally friendly carbon felt electrode for use in supercapacitors and a method of preparing this electrode. With the use of the electrode that is the subject of the invention in supercapacitors, the energy storage performance of the supercapacitor is increased, and supercapacitors that have a long cycle life, low cost, and high energy density and maintain their performance depending on use are obtained.

### State of the Art

Supercapacitors are promising energy storage systems due to their long charge-discharge life, low cost and high energy density. While the energy storage mechanisms of batteries occur only through redox events, the energy storage mechanisms of supercapacitors are realised by both redox and charge transfer of electrolyte ions to the electrode surface [1]. Among the components of supercapacitor systems are electrolytes. In supercapacitor systems, aqueous electrolytes such as sodium chloride (NaCl), potassium chloride (KCI), sulphuric acid (H₂SO₄), phosphoric acid (H₃PO₄) and potassium hydroxide (KOH) are used. These aqueous electrolytes exhibit a wide range of electrochemical working potential. In addition, since the production costs of the aforementioned aqueous electrolytes are low, these aqueous electrolytes are often preferred in the production of supercapacitors. However, the working potential range of aqueous electrolytes is limited to about 1.2 V due to the thermodynamic decomposition potential of water. Therefore, the operating potential range of supercapacitors working with aqueous electrolytes is a great disadvantage since it cannot meet the operating potential required in electronic devices [2].

Some improvements have been made to eliminate the potential gap problem, which is caused by the fact that the potential gap of supercapacitors working with aqueous electrolytes is limited to a maximum of 1.2 V. One of these improvements is the preference of organic electrolytes or ionic liquids over aqueous electrolytes in supercapacitors. These organic electrolytes and ionic liquids are among the most important materials that help to expand the working potential range of supercapacitors [3]. Although these materials, which are used as electrolytes in supercapacitors, play a major role in expanding the working potential range of supercapacitors, these materials cause some problems such as efficiency and cost.

Since most of the organic electrolytes used in supercapacitors in the state of the art are affected by oxygen and humidity in the air, removing the impurities in the environment brings along time and cost problems. If ionic liquids are used in the electrolytes of supercapacitors, it causes an extra cost problem.

A prior art study by Jincy Parayangattil Jyothibasu, Ming-Zhu Chen, and Rong-Ho Lee provides information on the preparation of a self-contained supercapacitor electrode that exhibits a high field capacitance. While preparing said electrode, a polypyrrole/carbon nanotube-based material was used, and when the prepared electrode was used in supercapacitors, a cycle life of 79.03% and a capacitance value of 327.5 F g⁻¹ were obtained.

When we classify the electrodes used in supercapacitors in the state of the art as aqueous electrolytes, organic electrolytes and ionic liquids, organic electrolytes and ionic liquids bring along time and cost problems. On the other hand, supercapacitors using aqueous electrolytes, which are low cost and have a wide range of electrochemical working potential, cannot meet the working potential required in electronic devices. As a result, it does not seem possible to come across any electrolyte configuration that solves the cost, efficiency, time and operating potential problems of supercapacitors in the state of the art. In addition, the electrodes in the state of the art and used in supercapacitors comprise costly and non-environmental materials such as metal or metal oxide.

Prior art document CN110164710A is related to binary metal compound composite electrode materials for supercapacitors and a preparation route combining bimetallic compounds with conductive materials. A positive aspect is that it explicitly targets the specific-capacitance limitation of conventional carbon and conductive-polymer electrodes by introducing bimetallic synergy and a composite concept. However, the teaching remains heavily dependent on metal-based active phases, which can inherently increase cost and raise sustainability concerns, while also introducing cycling-induced structural stress risks. The conductive component is mainly positioned as a carrier rather than a design element that systematically stabilizes the electroactive phase during long cycling. Consequently, the disclosure leaves room for an electrode strategy that achieves comparable performance without relying on cost- and stability-sensitive metal-compound architectures.

Another prior art document US2006033225A1 is related to processes for producing monolithic porous carbon disks from polyimide and/or polybenzimidazole precursors for electrochemical devices such as capacitors. The document details the teaching of precursor selection and processing logic aimed at obtaining carbon disks with interpenetrating pore structure and desirable electrode-relevant properties. However, the disclosed pathway still relies on polymer-precursor preparation, powder processing, and subsequent consolidation/pyrolysis steps that can remain process-intensive and energy-demanding. It focuses primarily on forming the carbon monolith and does not inherently provide a chemistry-driven mechanism to systematically enhance long-term capacitance retention under repetitive ion ingress/egress. Therefore, it leaves space for an electrode approach that simplifies the processing burden while more directly addressing durability and performance preservation during extended cycling.

Due to the reasons such as limitations and inadequacies of electrolyte structures in supercapacitors in the state of the art in terms of efficiency, time, cost and working potential, the time and cost problems of organic electrolytes used as electrodes in supercapacitors in the state of the art, the systems obtained from supercapacitors, in which ionic liquids are used as electrolytes, being able to only meet the needs of daily life and said systems not being suitable for mass production and failure to meet the required working potential in electronic devices in supercapacitors where aqueous electrolytes are used as electrodes, which are low cost and have a wide range of electrochemical working potential, it has been necessary to develop an environmentally friendly electrode that increases the energy storage performance of supercapacitors, provides a long cycle life for the supercapacitors in which it is used, exhibits high energy density, maintains its performance depending on use, and provides a low cost supercapacitor.

### Brief Description and Aims of the Invention

In the invention, according to Claim 1, a mellitic acid doped, polypyrrole coated environmentally friendly carbon felt electrode for use in supercapacitors and a method of preparing this electrode, according to Claim 3, is described. Embodiments of the invention are set forth with the appended dependent claims.

With the use of the electrode that is the subject of the invention in supercapacitors, the energy storage performance of the supercapacitor is increased, and supercapacitors that have a long cycle life, low cost, and high energy density and maintain their performance depending on use are obtained.

An aim of the invention is to improve the energy storage, cycle life, energy density and usage-related performance characteristics of supercapacitors at a low cost. Improving the performance properties of supercapacitors at a low cost is provided by a mellitic acid doped, polypyrrole coated carbon felt electrode, which is the subject of the invention, and the preparation method thereof. First of all, it should be noted that expensive materials such as metal/metal oxide, which are used in supercapacitor electrodes in the state of the art, are not used in a mellitic acid doped, polypyrrole coated carbon felt electrode that is the subject of the invention. In addition to all these, the fact that the electrode system that is the subject of the invention comprises aqueous electrolytes, which is a cheap material, also eliminates the cost problem in supercapacitors. In addition, the process costs to be incurred are eliminated by means of the fact that the carbon felt electrode, which is the subject of the invention, is produced with an effortless process compared to those known in the state of the art. The use of the supercapacitor electrode that is the subject of the invention as an electrode material directly as a result of a single chemical treatment with the addition of carbon felt and the specified chemicals into the hydrothermal reactor provides a great advantage in terms of process cost. The supercapacitor electrode that is the subject of the invention provides high performance properties without being subjected to any other coating and production process. The supercapacitor performance is increased by 4.7 times with the effect of mellitic acid doped as an ion against the structure of conductive polymers in the electrodes that are the subject of the invention, which are obtained at low cost. The chemical and physical properties of polypyrrole are improved and the supercapacitor performance is increased by means of the carboxyl (-COOH) groups excessively present in the film formation of mellitic acid, which is a carboxylic acid used as a counter ion. As a result, providing a high performance supercapacitor at low cost is achieved by using an environmentally friendly, mellitic acid doped, polypyrrole coated carbon felt electrode, which is the subject of the invention, in supercapacitors.

In addition, the energy storage performance of supercapacitors is improved. Improving the energy storage performance in supercapacitors is provided by a mellitic acid doped, polypyrrole coated carbon felt electrode and by the preparation method thereof, which are the subject of the invention. In the invention, electron transfer is facilitated when the electrode material synthesised in the mellitic acid environment comes into contact with the electrolyte, and thus, the possibility of reaching wide operating voltage and high current densities is provided to the supercapacitors when the electrodes of the invention are used in supercapacitors. As a result, the electrode that is the subject of the invention increases the supercapacitance performance of the supercapacitors in which they are used, that is, the energy storage performance. When the electrode that is the subject of the invention is used in supercapacitors, more charge-discharge cycles are provided to the supercapacitor compared to batteries.

Another aim of the invention is to ensure that supercapacitors have a long cycle life. The long cycle life of supercapacitors is ensured by a mellitic acid doped, polypyrrole coated carbon felt electrode, which is the subject of the invention, and by the preparation method thereof. Since the electrode that is the subject of the invention comprises mellitic acid in addition to polypyrrole, it increases the cycle life of the supercapacitors where it is used. For example, at the end of 1000 cycles, a polypyrrole-based electrode can only maintain 16.8% of its capacitance performance, while a mellitic acid-doped and polypyrrole-coated carbon felt electrode, which is the subject of the invention, can maintain its capacitance value at the rate of 89.5%.

Another aim of the invention is to enable supercapacitors to exhibit high energy density. Providing high energy density to supercapacitors is ensured by a mellitic acid doped and polypyrrole coated carbon felt electrode and the preparation method thereof. In the electrode that is the subject of the invention, mellitic acid is added to the polypyrrole structure as a counterion, and by this means, said electrode can operate in a wide potential range such as 3.2 V. When the electrode, which is the subject of the invention, is used in supercapacitors, which can operate in a wide potential range such as 3.2 V, a high energy density is ensured in supercapacitors.

With the invention, it is ensured that the performances of supercapacitors are preserved depending on the use. Preservation of the performance of supercapacitors depending on use is provided by a mellitic acid doped polypyrrole coated carbon felt electrode, which is the subject of the invention, and by the preparation method thereof. As a result of the use of a large anion such as mellitic acid in the electrode, which is the subject of the invention, said mellitic acid enters the skeleton structure of the polymer, allowing the swelling and shrinking behaviour to occur with smaller volumetric changes, and therefore, if the electrode of the invention is used in supercapacitors, the supercapacitor performance is increased depending on the use.

When the electrode that is the subject of the invention is used in supercapacitors, an average of 80% of the capacitance value is preserved even after 5000 cycles, depending on the use.

Another aim of the invention is to provide an environmentally friendly electrode for use in supercapacitors. Environmentally harmful materials such as metal/metal oxide used in supercapacitor electrodes in the state of the art are not used in a mellitic acid doped and polypyrrole coated carbon felt electrode, which is the subject of the invention.

### Description of Drawings

**Figure 1****.** Comparative graph of the cyclic voltammograms of the polypyrrole-based electrodes comprising different carboxylic acid groups in the prior art and the cyclic voltammogram of the polypyrrole and mellitic acid doped electrode, which is the subject of the invention; a) polypyrrole, b) polypyrrole/mellitic acid, c) polypyrrole/pyromellitic acid, d) polypyrrole/phthalic acid
**Figure 2****.** Comparative graph of the galvanostatic charge/discharge (GCD) curves of the prior art polypyrrole-based electrodes comprising different carboxylic acid groups and the galvanostatic charge/discharge (GCD) curves of the polypyrrole and mellitic acid doped electrode, which is the subject of the invention; e) polypyrrole/mellitic acid, f) polypyrrole/pyromellitic acid, g) polypyrrole/phthalic acid, h) polypyrrole
**Figure 3****.** IR drop graph at 0.8 A/g current density of the electrode that is the subject of the invention
**Figure 4****.** Cyclic voltammograms of the electrode that is the subject of the invention at different potential ranges
**Figure 5****.** Cyclic voltammograms of the electrode that is the subject of the invention at different scanning speeds.
**Figure 6****.** Galvanostatic charge/discharge (GCD) curves of the electrode that is the subject of the invention at different current densities
**Figure 7****.** Comparative graph of the cycle numbers of the polypyrrole-based electrodes comprising different carboxylic acid groups in the prior art at a current density of 1 A/g and the cycle number of the polypyrrole and mellitic acid doped electrode, which is the subject of the invention; i) polypyrrole/mellitic acid, i) polypyrrole/pyromellitic acid, j) polypyrrole/phthalic acid, k) polypyrrole
**Figure 8****.** Graph showing the specific capacitance values obtained from the cyclic voltammogram of the electrode that is the subject of the invention at different scanning rates
**Figure 9****.** Graph showing the specific capacitance values obtained from the GCD curves of the electrode that is the subject of the invention
**Figure 10****.** Cyclic voltammograms of the supercapacitor formed by the electrode of the invention at different potential ranges.
**Figure 11****.** Cyclic voltammograms of the supercapacitor using the electrode that is the subject of the invention at different scanning rates.
**Figure 12****.** The galvanostatic charge/discharge (GCD) curves of the supercapacitor using the electrode of the invention at different current density
**Figure 13****.** The specific capacitance values obtained from the cyclic voltammograms of the supercapacitor in which the electrode of the invention is used
**Figure 14****.** The specific capacitance values obtained from the galvanostatic charge/discharge (GCD) curves of the supercapacitor using the electrode of the invention
**Figure 15****.** Graph showing the % capacitance performance and the EIS test in the graph depending on the number of cycles of the supercapacitor in which the electrode that is the subject of the invention is used.
**Figure 16****.** FTIR spectrum of a prior art polypyrrole coated carbon felt electrode
**Figure 17****.** FTIR spectrum of the electrode that is the subject of the invention
**Figure 18****.** Graph showing thermal gravimetric analysis (TGA) of a prior art polypyrrole coated carbon felt electrode
**Figure 19****.** Graphic showing the thermal gravimetric analysis (TGA) of the electrode that is the subject of the invention
**Figure 20****.** SEM image of a prior art polypyrrole coated carbon felt electrode
**Figure 21****.** SEM image of the electrode that is the subject of the invention
**Figure 22****.** Graph showing the pore size distribution analysis of the electrode that is the subject of the invention
**Figure 23****.** Graph showing the adsorption/desorption isotherm of the electrode that is the subject of the invention
**Figure 24****.** Graph showing the multi-point BET surface area analysis of the electrode that is the subject of the invention

### Detailed Description of the Invention

The invention relates to a mellitic acid doped, polypyrrole coated environmentally friendly carbon felt electrode for use in supercapacitors and a method of preparing this electrode. With the use of the electrode that is the subject of the invention in supercapacitors, the energy storage performance of the supercapacitor is increased, and supercapacitors that have a long cycle life, low cost, and high energy density and maintain their performance depending on use are obtained.

A mellitic acid doped and polypyrrole coated, environmentally friendly carbon felt electrode that is the subject of the invention for use in the supercapacitors comprises pyrrole monomer, mellitic acid and ferric chloride hexahydrate and the concentrations of said components in 20 mL volume are 0.001-0.5 mol/L pyrrole monomer, 0.005-0.1 mol/L mellitic acid and 0.001-0.5 mol/L ferric chloride hexahydrate. As the volume of 20 mL changes, the values of the components forming the electrode that is the subject of the invention also change at the same rate. The carbon felt electrode for use in supercapacitors according to the invention is defined by the features of Claim 1. The surface area of said carbon felt electrode is 4x5 cm².

A method of preparing a mellitic acid doped and polypyrrole coated, environmentally friendly carbon felt electrode that is the subject of the invention for use in the supercapacitors comprises the process steps of;
i. washing the carbon felt electrode with acetone in an ultrasonic bath for 30 minutes and drying it for 4-48 hours at room temperature for the removal of organic pollutants on the surface.
ii. immersing the electrodes in nitric acid (HNO₃) at room temperature and waiting for 1-100 hours to activate the electrode surface
iii. washing the electrodes kept in nitric acid with deionized water until neutral pH is reached and then drying in an oven at 40-60°C for 12-36 hours,
iv. adding pyrrole monomer with a concentration of 0.001-0.5 mol/L, mellitic acid with a concentration of 0.005-0.1 mol/L, and ferric chloride hexahydrate with a concentration of 0.001-0.5 mol/L to a 50:50 ethanol:water mixture solution in a 20 mL volume and stirring at room temperature for 30-120 minutes,
v. keeping the prepared solution and the carbon felt electrode with a surface area of 4x5 cm² in an autoclave at 60-180°C for 3-12 hours and carrying out the polymerisation with a hydrothermal reaction, and
vi. washing the composite electrodes obtained after the synthesis in 50:50 ethanol:water mixture solution and drying at 40-90°C for 6-24 hours.

The preparation method of the carbon felt electrode for use in supercapacitors according to the invention is defined by the features of Claim 3.

The polymerisation mentioned in the process step v in the method is carried out with a hydrothermal reaction. By means of said hydrothermal reaction, an electrode with a rougher and larger surface area is obtained. Therefore, it is ensured that the electrode interacts more with the electrolyte ions and when the electrode of the invention is used in supercapacitors, the capacitance properties of the supercapacitors are improved. In addition to all these, as stated in the method above, in an embodiment of the invention, in the process step iv, the maximum capacitance value, energy density and cycle life values of the electrode, which is the subject of the invention, indicated in Table 1 were obtained by using pyrrole monomer at a concentration of 0.2 mol/L and mellitic acid at a concentration of 0.02 mol/L in a 20 mL volume. In other words, in an embodiment of the invention, the electrode that is the subject of the invention exhibits maximum performance values by using pyrrole monomer at a concentration of 0.2 mol/L and mellitic acid at a concentration of 0.02 mol/L in a 20 mL volume in the process step iv.

In the examination of the performance of the electrode, which is the subject of the invention, in supercapacitors, cyclic voltammetry (CV), galvanostatic charge-discharge (GCD) and electrochemical impedance spectroscopy (EIS) methods were used. In the system where 1.0 M H₂SO₄ solution is used as the electrolyte, the supercapacitor potential gap of the electrode was optimised by using the cyclic voltammetry method (CV). After determining the potential range with capacitive properties, the same optimisation was also examined using the galvanostatic charge-discharge method (GCD). Finally, electrochemical impedance spectroscopy (EIS) measurements were performed. In addition, the cycle life offered by the electrode material and how much of the capacitance value can be preserved have been examined. Then, a supercapacitor cell was formed using a graphite sheet electrode and 1.0 M H₂SO₄-AMPS electrolyte. Likewise, the characterisation of the supercapacitor was made using electrochemical methods and said characterisations (spectroscopic, morphological and thermal characterisations) are shown in the figures.

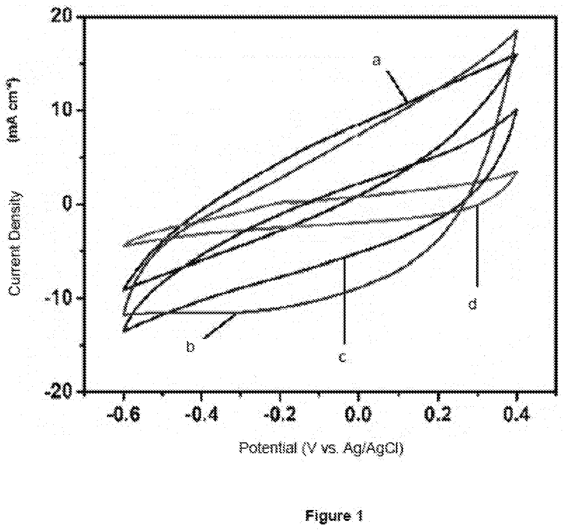

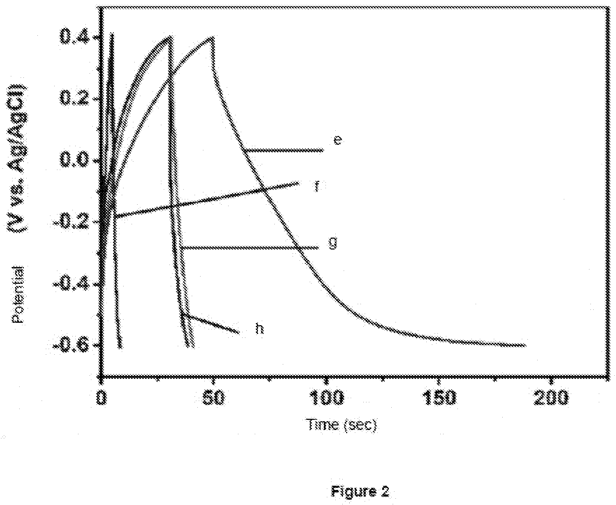

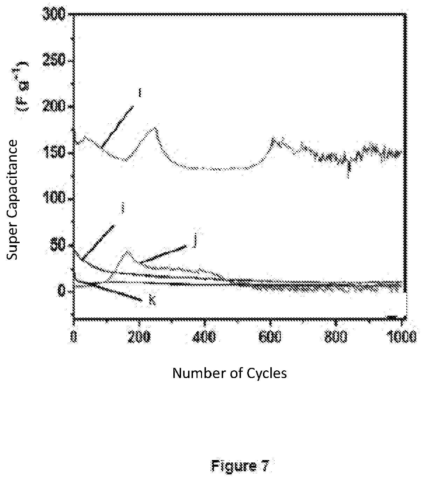

In the invention, electron transfer is facilitated when the electrode material synthesised in the mellitic acid environment comes into contact with the electrolyte, and thus, the possibility of reaching wide operating voltage and high current densities is provided to the supercapacitors when the electrodes of the invention are used in supercapacitors. As a result, the electrode that is the subject of the invention increases the supercapacitance performance of the supercapacitors in which they are used, that is, the energy storage performance. When the electrode that is the subject of the invention is used in supercapacitors, more charge-discharge cycles are provided to the supercapacitor compared to batteries. By means of the six carboxyl (-COOH) groups contained in the mellitic acid used to obtain the electrode, which is the subject of the invention, high capacitance value is provided to the supercapacitors in which the electrode is used. While phthalic acid used in supercapacitor electrodes in the prior art contains two carboxyl groups and pyromellitic acid contains four carboxyl groups, mellitic acid, which is one of the elements that forms the basis of the invention, contains six carboxyl groups. The effects of carboxyl numbers on supercapacitor performances are shown in Figure 1, Figure 2 and Figure 7.

**Table 1. Comparison table of the performance of the electrode that is the subject of the invention and the electrodes in the state of the art**

| **Electrode** | **Electrolyte** | **Maximum Capacitance Value** | **Energy Density** | **Cycle Life** | **Ref.** |
|---|---|---|---|---|---|
| Polypyrrole/Oxalic Acid/Titanium Foil | 1.0 M KCl | 480, 10 F g⁻¹, mV.s-¹ | - | 1000 (%91) | [4] |
| Polypyrrole/poly[2, 5-bis(3-sulfonatopropoxy)-1,4-ethynylphenylene-alt-1,4-ethynylphenylene] (PPy/SSA) | 0.5 M Na₂SO₄ | 545 F g⁻¹, 2 mV.s⁻¹ | - | - | [5] |
| Polypyrrole/Tartaric acid/ Triton X100/ pencil graphite (PPy-TA-TX100/PG) | 0.1 M H₂SO₄ | 794 F g⁻¹, 1 mAcm⁻² | 105 Wh kg⁻¹ | 1000 (%80) | [6] |
| Poly(indole-5-carboxylic acid) | 1.0 M HClO₄ | 350 F g⁻¹, 1.0 A. g⁻¹ | 9.4 Wh kg⁻¹ | 1000 (%94) | [7] |
| 9-anthracene carboxylic acid modified graphene | 1.0 M H₂SO₄ | 577, F g⁻¹, 7.0 A. G⁻¹ | - | 1000 (%83.4 ) | [8] |
| Functionalisation of coordinated graphene oxide/chromium complexes on 5 aminopyridine-2-carboxylic acids. (FGO-Ap/Cr) | 3.0 M KNO₃ | 461.5 F g⁻¹, 1.0 A. g⁻¹ | 523.3 W h kg -1 | 5000 (%96,2 ) | [9] |
| Poly(indole-7-carboxylic acid) | 1.0 M H₂SO₄ | 430 F g⁻¹, 2.5 A. g⁻¹ | 48.3 Wh kg⁻¹ | 1000 (%96) | [10] |
| 2,2,6,6-tetramethylpilperidi ne 1-oxyl(TEMPO)-oxidised bacterial cellulose (BC) | 2.0 M KOH | 160.2 F g⁻¹, 1 A.g⁻¹ | - | 10000 (%84.2 ) | [11] |
| poly(acrylonitrile-co-itaconic acid) | EMITFSI | 92.9 F g⁻¹, 10 mV.s-¹ | 46 Wh kg⁻¹ | 2500 (%77) | [12] |
| Cu-CP Three Dimensional Copper Coordination Polymer | 1.0 M KOH | 735 F g⁻¹, 1 A.g⁻¹ | - | 1500 (-) | [13] |
| (P5FIn)/WO₃ poly(5-formilindole)/WO₃ | 1.0 M H₂SO₄ | 34.1 mF.cm⁻², 0.1 mA.cm⁻² | - | 5000 (%93) | [14] |
| (1- pyrene carboxylic acid) | 6.0 M KOH | 210 F g⁻¹, 10 mV.s⁻¹ | - | 500 (-) | [15] |
| functionalised graphene | | | | | |
| **Polypyrrole (Ppy)/Mellitic acid** | **1.0 M H₂SO₄-AMPS** | **687 F g⁻¹, 5 mV.s⁻¹** | **785.8 Wh kg⁻¹** | **5000 (%83)** | **The Invention** |

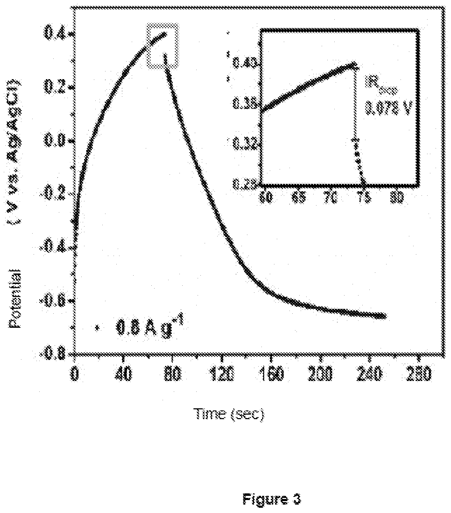

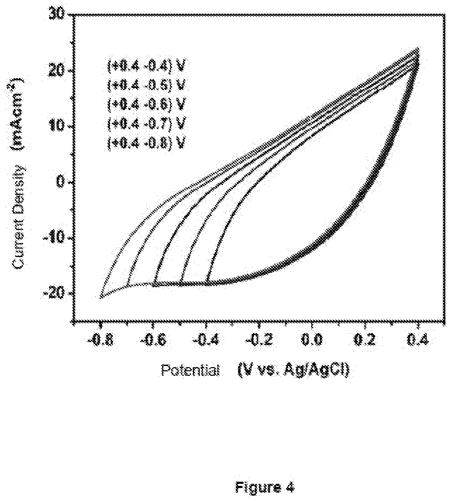

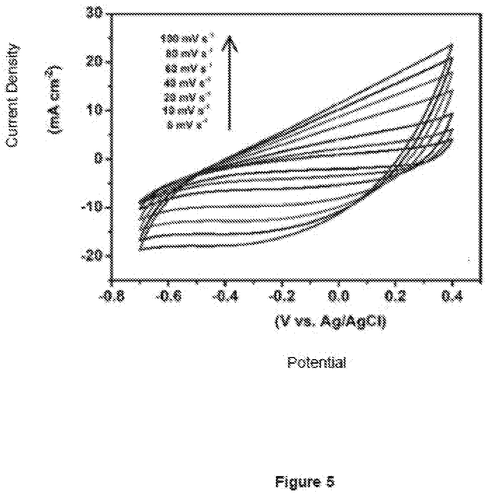

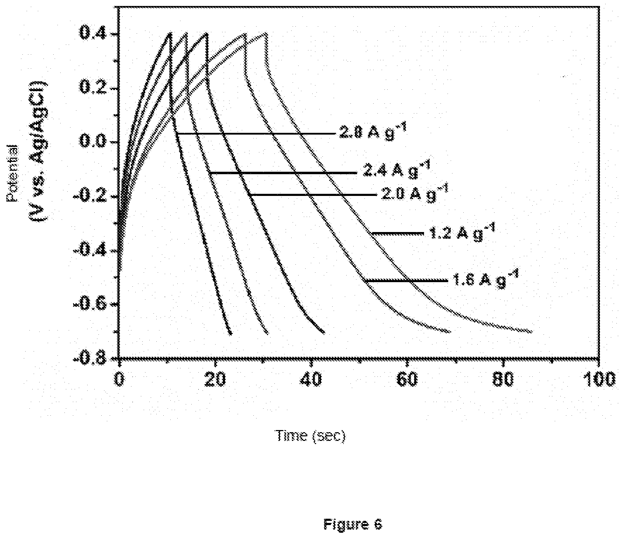

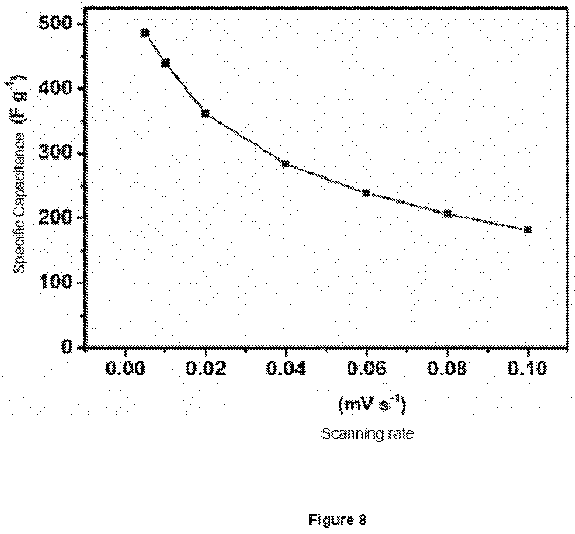

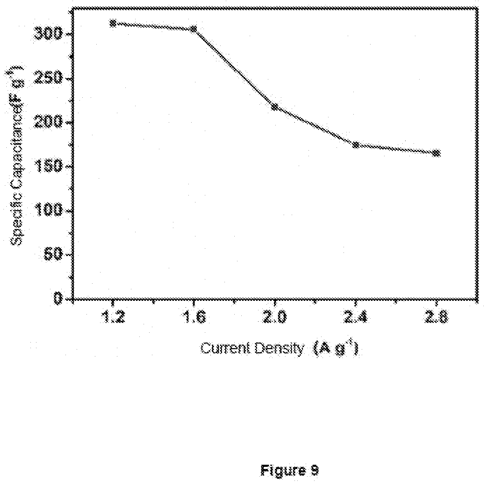

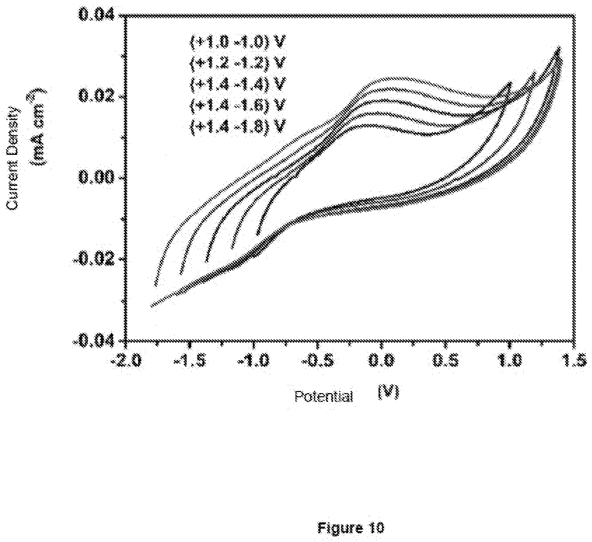

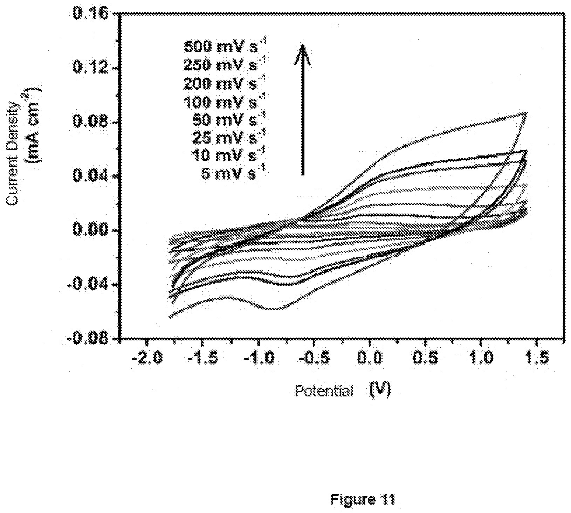

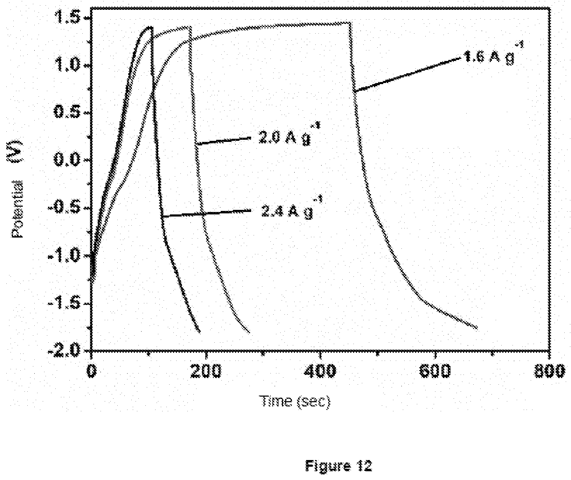

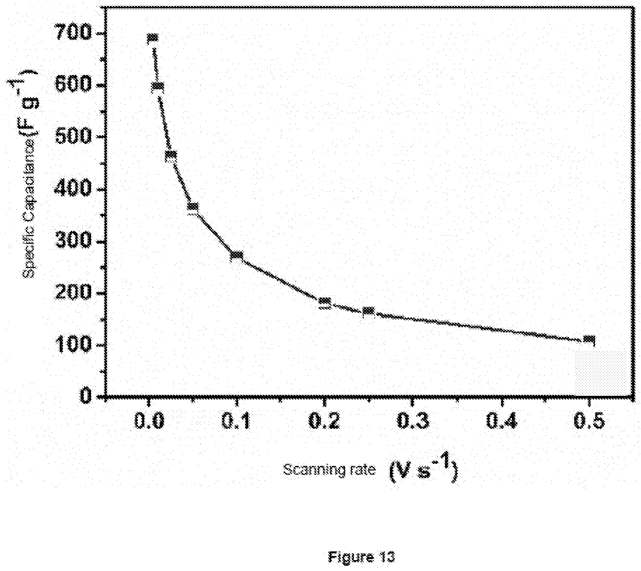

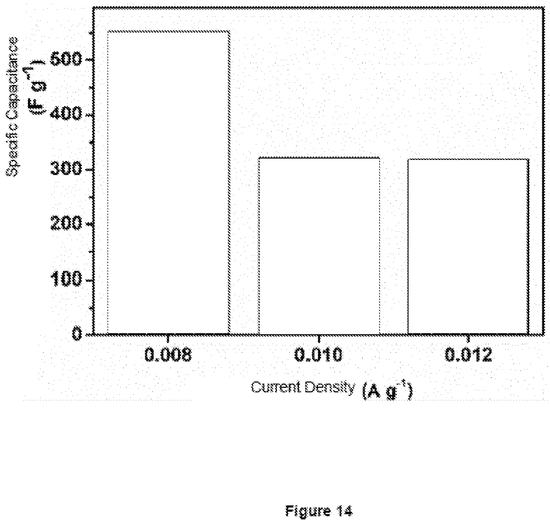

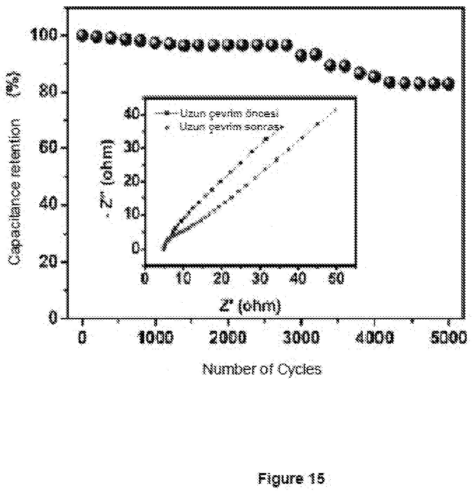

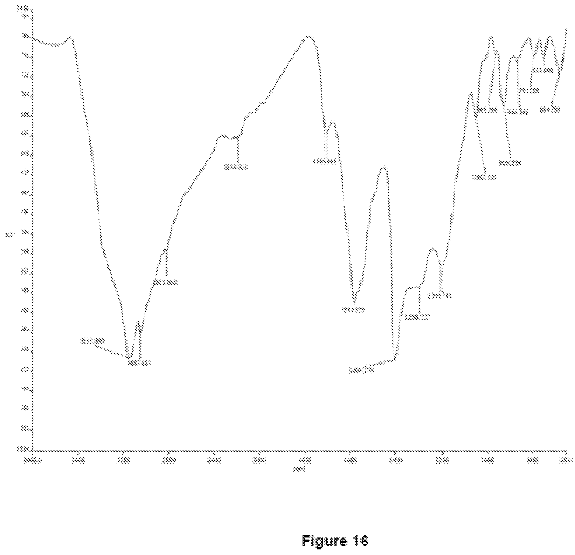

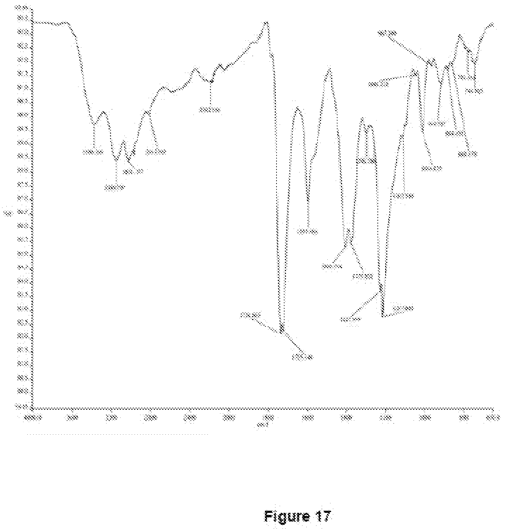

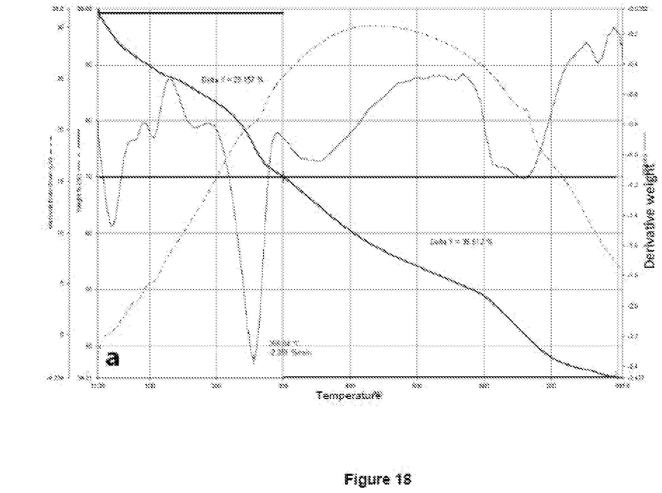

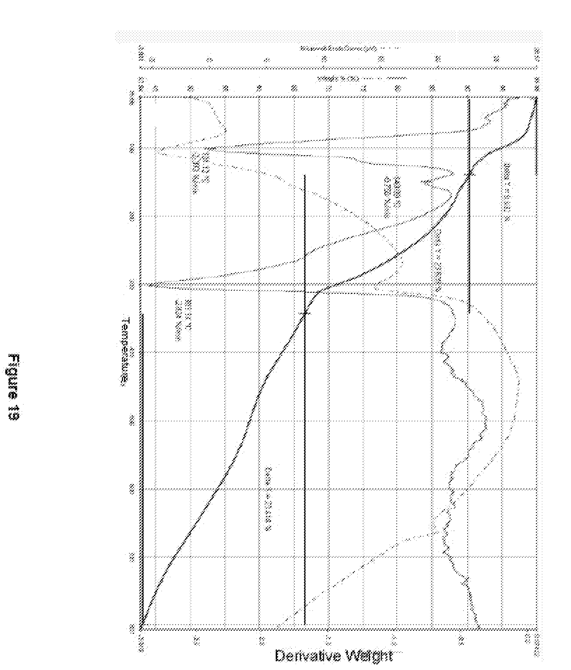

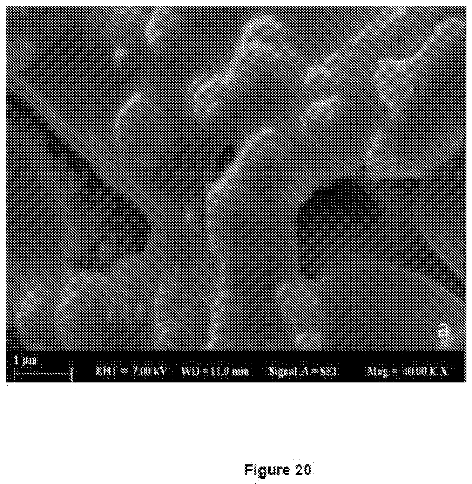

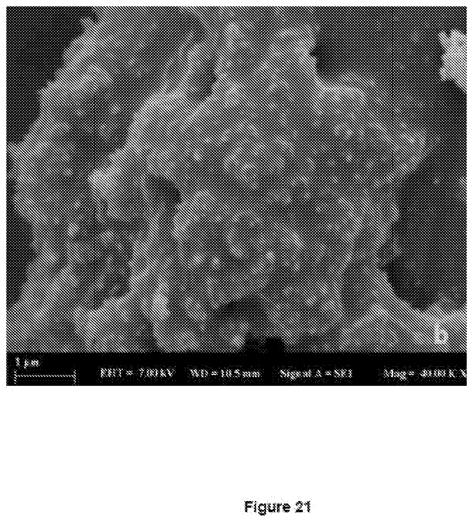

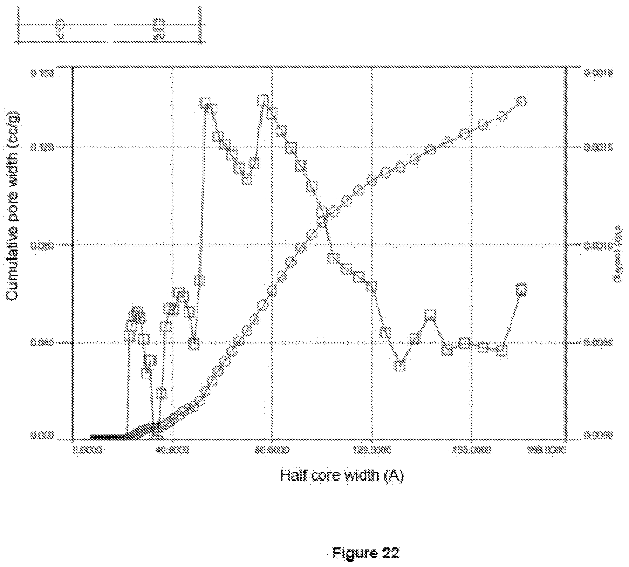

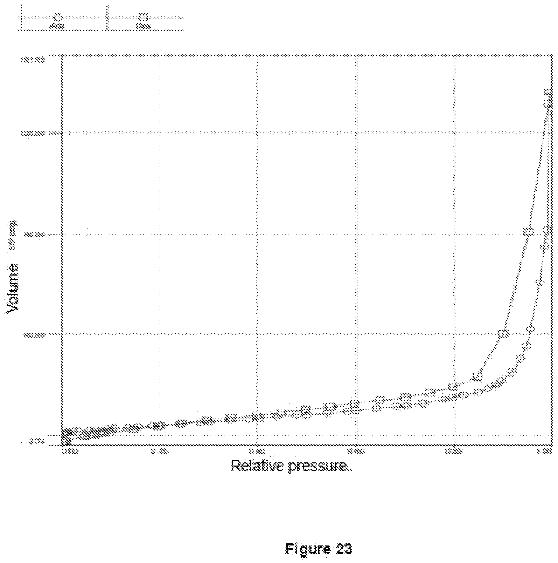

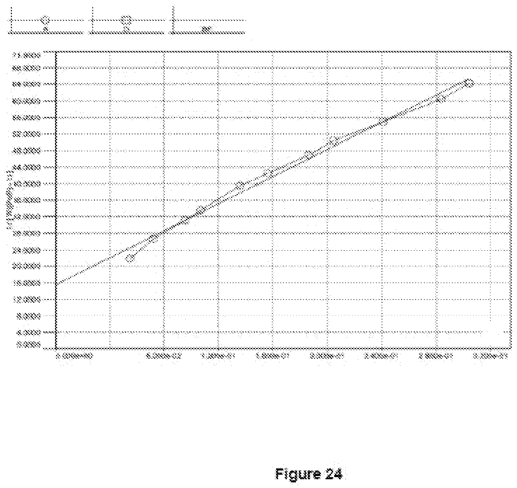

As can be seen from Table 1 and the graphics in Figure 1-24, the mellitic acid doped and polypyrrole coated, environmentally friendly carbon felt electrode comprising only the aqueous electrolyte system, which is the subject of the invention, has a higher value than the electrodes in the state of the art in terms of energy density (Wh kg⁻¹) provided to the supercapacitors. The carbon felt electrode described in the invention comprises only an aqueous electrolyte system, thereby providing an electrode for use in supercapacitors at a low cost. The same is also true for cycle life. In the invention, high cycle life is provided to the supercapacitor with the use of low cost electrodes. In short, the mellitic acid doped and polypyrrole coated, environmentally friendly carbon felt electrode comprising only the aqueous electrolyte system, which is the subject of the invention, compared to the electrodes in the state of the art, provides a very high energy density (785.8 Wh kg⁻¹) to the supercapacitors, and despite the minimum electrode cost, it can maintain the supercapacitor capacitance value of 83% at the end of 5000 cycles and can provide the maximum capacitance value of 687 F/g to the supercapacitor at a scanning speed of 5 mV s⁻¹.

The supercapacitor performance is increased by 4.7 times with the effect of mellitic acid doped as an ion against the structure of conductive polymers in the electrodes that are the subject of the invention, which are obtained at low cost. At the end of 1000 cycles, a polypyrrole-based electrode can only maintain 16.8% of its capacitance performance, while a mellitic acid-doped and polypyrrole-coated carbon felt electrode, which is the subject of the invention, can maintain its capacitance value at the rate of 89.5%. When the electrode, which is the subject of the invention, is used in supercapacitors, which can operate in a wide potential range such as 3.2 V, a high energy density is ensured in supercapacitors. Environmentally harmful materials such as metal/metal oxide used in supercapacitor electrodes in the state of the art are not used in a mellitic acid doped and polypyrrole coated carbon felt electrode, which is the subject of the invention.

### REFERENCES

**1.** X. Zhao, B.M. Sánchez, P.J. Dobson, P.S. Grant, The role of nanomaterials in redox-based supercapacitors for next generation energy storage devices, Nanoscale. 3 (2011) 839-855. https://doi.org/10.1039/C0NR00594K.
**2.** Y. Liu, Q. Wu, L. Liu, P. Manasa, L. Kang, F. Ran, Vanadium nitride for aqueous supercapacitors: a topic review, J. Mater. Chem. A. 8 (2020) 8218-8233. https://doi.org/10.1039/D0TA01490G.
**3.** J.S. Shaikh, N.S. Shaikh, R. Kharade, S.A. Beknalkar, J. V Patil, M.P. Suryawanshi, P. Kanjanaboos, C.K. Hong, J.H. Kim, P.S. Patil, Symmetric supercapacitor: Sulphurized graphene and ionic liquid, J. Colloid Interface Sci. 527 (2018) 40-48. https://doi.org/https://doi.org/10.1016/j.jcis.2018.05.022.
**4.** L.-Z. Fan, J. Maier, High-performance polypyrrole electrode materials for redox supercapacitors, Electrochem. Commun. 8 (2006) 937-940. https://doi.org/10.1016/j.elecom.2006.03.035.
**5.** X. Li, P. Imin, A. Adronov, I. Zhitomirsky, Effect of 5-sulfosalicylic acid and poly[2,5-bis(3-sulfonatopropoxy)-1,4-ethynylphenylene-alt-1,4-ethynylphenylene] on electrodeposition of polypyrrole-carbon nanotube films on stainless steel, Mater. Lett. 68 (2012) 24-27. https://doi.org/10.1016/j.matlet.2011.10.010.
**6.** E. Karaca, N.Ö. Pekmez, K. Pekmez, Galvanostatic deposition of polypyrrole in the presence of tartaric acid for electrochemical supercapacitor, Electrochim. Acta. 147 (2014) 545-556. https://doi.org/10.1016/j.electacta.2014.09.136.
**7.** X. Ma, W. Zhou, D. Mo, Z. Wang, J. Xu, Capacitance comparison of poly(indole-5-carboxylic acid) in different electrolytes and its symmetrical supercapacitor in HClO4 aqueous electrolyte, Synth. Met. 203 (2015) 98-106. https://doi.org/10.1016/j.synthmet.2015.02.025.
**8.** P. Khanra, T. Kuila, S.H. Bae, N.H. Kim, J.H. Lee, Electrochemically exfoliated graphene using 9-anthracene carboxylic acid for supercapacitor application, J. Mater. Chem. 22 (2012) 24403. https://doi.org/10.1039/c2jm34838a.
**9.** M.D. Najafi, E. Kowsari, H.R. Naderi, A. Chinnappan, S. Ramakrishna, A. Ehsani, A. Shokravi, Functionalization of graphene oxide via chromium complexes coordinated on 5-aminopyridine-2-carboxylic acid as a symmetric supercapacitor electrode materials in energy storage devices, Compos. Sci. Technol. 211 (2021) 108844. https://doi.org/10.1016/j.compscitech.2021.108844.
**10**.X. Ma, W. Zhou, D. Mo, J. Hou, J. Xu, Effect of substituent position on electrodeposition, morphology, and capacitance performance of polyindole bearing a carboxylic group, Electrochim. Acta. 176 (2015) 1302-1312. https://doi.org/10.1016/j.electacta.2015.07.148.
**11.**T. Zhang, J. Lang, L. Liu, L. Liu, H. Li, Y. Gu, X. Yan, X. Ding, Effect of carboxylic acid groups on the supercapacitive performance of functional carbon frameworks derived from bacterial cellulose, Chinese Chem. Lett. 28 (2017) 2212-2218. https://doi.org/https://doi.org/10.1016/j.cclet.2017.08.013.
**12.**N.C. Abeykoon, S.F. Mahmood, D.J. Yang, J.P. Ferraris, Electrospun poly(acrylonitrile- co -itaconic acid) as a porous carbon precursor for high performance supercapacitor: study of the porosity induced by in situ porogen activity of itaconic acid, Nanotechnology. 30 (2019) 435401. https://doi.org/10.1088/1361-6528/ab32c0.
**13.**L. Yu, X. Wang, M. Cheng, H. Rong, Y. Song, Q. Liu, A Three-Dimensional Copper Coordination Polymer Constructed by 3-Methyl-1 H -pyrazole-4-carboxylic Acid with Higher Capacitance for Supercapacitors, Cryst. Growth Des. 18 (2018) 280-285. https://doi.org/10.1021/acs.cgd.7b01219.
**14**.Q. Guo, X. Zhao, Z. Li, D. Wang, G. Nie, A novel solid-state electrochromic supercapacitor with high energy storage capacity and cycle stability based on poly(5-formylindole)/WO3 honeycombed porous nanocomposites, Chem. Eng. J. 384 (2020) 123370. https://doi.org/10.1016/j.cej.2019.123370.
**15**.S. Ghosh, X. An, R. Shah, D. Rawat, B. Dave, S. Kar, S. Talapatra, Effect of 1-pyrene carboxylic-acid functionalization of graphene on its capacitive energy storage, J. Phys. Chem. C. 116 (2012) 20688-20693. https://doi.org/10.1021/jp303339f.

## Claims

1. A mellitic acid doped polypyrrole coated environmentally friendly carbon felt electrode for use in supercapacitors, said polypyrrole being formed by polymerisation with a hydrothermal reaction of a pyrrole monomer, mellitic acid and ferric chloride hexahydrate, **characterised in that** the concentrations of pyrrole monomer, mellitic acid and ferric chloride hexahydrate in a 50:50 ethanol:water mixture solution in a volume of 20 mL are 0.001-0.5 mol/L pyrrole monomer, 0.005-0.1 mol/L mellitic acid and 0.001-0.5 mol/L ferric chloride hexahydrate.

2. The electrode according to Claim 1, wherein surface area of said carbon felt electrode is 4x5 cm².

3. A preparation method of a mellitic acid doped polypyrrole coated environmentally friendly carbon felt electrode for use in supercapacitors, comprising the process steps of:
i. washing the carbon felt electrode with acetone in an ultrasonic bath for 30 minutes and drying it for 4-48 hours at room temperature for the removal of organic pollutants on the surface.
ii. immersing the electrodes in nitric acid (HNO₃) at room temperature and waiting for 1-100 hours to activate the electrode surface
iii. washing the electrodes kept in nitric acid with deionized water until neutral pH is reached and then drying in an oven at 40-60°C for 12-36 hours,
iv. adding pyrrole monomer with a concentration of 0.001-0.5 mol/L, mellitic acid with a concentration of 0.005-0.1 mol/L, and ferric chloride hexahydrate with a concentration of 0.001-0.5 mol/L to a 50:50 ethanol:water mixture solution in a 20 mL volume and stirring at room temperature for 30-120 minutes,
v. keeping the prepared solution and the carbon felt electrode with a surface area of 4x5 cm² in an autoclave at 60-180°C for 3-12 hours and carrying out the polymerisation with a hydrothermal reaction, and
vi. washing the composite electrodes obtained after the synthesis in 50:50 ethanol:water mixture solution and drying at 40-90°C for 6-24 hours.

4. The preparation method according to Claim 3, comprising, in process step iv., adding pyrrole monomer with a concentration of 0.001-0.5 mol/L, mellitic acid with a concentration of 0.005-0.02 mol/L, and ferric chloride hexahydrate with a concentration of 0.001-0.5 mol/L to a 50:50 ethanol:water mixture solution in a 20 mL volume and stirring at room temperature for 30-120 minutes.

5. The carbon felt electrode according to Claim 1 or Claim 2, comprising 0.2 mol/L concentration of pyrrole monomer and 0.02 mol/L concentration of mellitic acid in a volume of 20 mL.

## Patentansprüche

1. Eine mit Mellitsäure dotiertem Polypyrrol beschichtete umweltfreundliche Kohlenstofffilzelektrode zur Verwendung in Superkondensatoren, wobei das Polypyrrol durch Polymerisation mittels einer hydrothermalen Reaktion eines Pyrrolmonomers, von Mellitsäure und von Eisen(III)-chlorid-Hexahydrat gebildet wird, **dadurch gekennzeichnet, dass** die Konzentrationen des Pyrrolmonomers, der Mellitsäure und des Eisen(III)-chlorid-Hexahydrats in einer Ethanol-Wasser-Mischlösung im Verhältnis 50:50 mit einem Volumen von 20 mL 0,001-0,5 mol/L Pyrrolmonomer, 0,005-0,1 mol/L Mellitsäure und 0,001-0,5 mol/L Eisen(III)-chlorid-Hexahydrat betragen.

2. Die Elektrode nach Anspruch 1, wobei die Oberfläche der Kohlenstofffilzelektrode 4 × 5 cm² beträgt.

3. Ein Verfahren zur Herstellung einer mit Mellitsäure dotiertem Polypyrrol beschichteten umweltfreundlichen Kohlenstofffilzelektrode zur Verwendung in Superkondensatoren, umfassend die folgenden Verfahrensschritte:
i. Waschen der Kohlenstofffilzelektrode mit Aceton in einem Ultraschallbad für 30 Minuten und Trocknen für 4-48 Stunden bei Raumtemperatur zur Entfernung organischer Verunreinigungen auf der Oberfläche;
ii. Eintauchen der Elektroden in Salpetersäure (HNO₃) bei Raumtemperatur und Belassen darin für 1-100 Stunden zur Aktivierung der Elektrodenoberfläche;
iii. Waschen der in Salpetersäure belassenen Elektroden mit deionisiertem Wasser, bis ein neutraler pH-Wert erreicht ist, und anschließendes Trocknen in einem Ofen bei 40-60 °C für 12-36 Stunden;
iv. Zugeben von Pyrrolmonomer mit einer Konzentration von 0,001-0,5 mol/L, Mellitsäure mit einer Konzentration von 0,005-0,1 mol/L und Eisen(III)-chlorid-Hexahydrat mit einer Konzentration von 0,001-0,5 mol/L zu einer Ethanol-Wasser-Mischlösung im Verhältnis 50:50 mit einem Volumen von 20 mL und Rühren bei Raumtemperatur für 30-120 Minuten;
v. Halten der hergestellten Lösung und der Kohlenstofffilzelektrode mit einer Oberfläche von 4 × 5 cm² in einem Autoklaven bei 60-180 °C für 3-12 Stunden und Durchführen der Polymerisation mittels einer hydrothermalen Reaktion; und
vi. Waschen der nach der Synthese erhaltenen Verbundelektroden in einer Ethanol-Wasser-Mischlösung im Verhältnis 50:50 und Trocknen bei 40-90 °C für 6-24 Stunden.

4. Das Herstellungsverfahren nach Anspruch 3, umfassend in Verfahrensschritt iv. das Zugeben von Pyrrolmonomer mit einer Konzentration von 0,001-0,5 mol/L, Mellitsäure mit einer Konzentration von 0,005-0,02 mol/L und Eisen(III)-chlorid-Hexahydrat mit einer Konzentration von 0,001-0,5 mol/L zu einer Ethanol-Wasser-Mischlösung im Verhältnis 50:50 mit einem Volumen von 20 mL und das Rühren bei Raumtemperatur für 30-120 Minuten.

5. Die Kohlenstofffilzelektrode nach Anspruch 1 oder Anspruch 2, umfassend Pyrrolmonomer mit einer Konzentration von 0,2 mol/L und Mellitsäure mit einer Konzentration von 0,02 mol/L in einem Volumen von 20 mL.

## Revendications

1. Électrode en feutre de carbone respectueuse de l'environnement, revêtue de polypyrrole dopé à l'acide mellitique pour être utilisée dans des supercondensateurs, ledit polypyrrole étant formé par polymérisation avec une réaction hydrothermale d'un monomère de pyrrole, d'acide mellitique et de chlorure ferrique hexahydraté, **caractérisée en ce que** les concentrations du monomère de pyrrole, de l'acide mellitique et du chlorure ferrique hexahydraté dans une solution de 20 mL composée d'un mélange éthanol/eau à 50:50 en volume sont respectivement de 0,001 à 0,5 mol/L pour le monomère de pyrrole, de 0,005 à 0,1 mol/L pour l'acide mellitique et de 0,001 à 0,5 mol/L pour le chlorure ferrique hexahydraté.

2. Électrode selon la revendication 1, dans laquelle la surface de ladite électrode en feutre de carbone est de 4 × 5 cm².

3. Procédé de préparation d'une électrode en feutre de carbone respectueuse de l'environnement, revêtue de polypyrrole dopé à l'acide mellitique, destinée à être utilisée dans des supercondensateurs, comprenant les étapes suivantes :
i. lavage de l'électrode en feutre de carbone avec de l'acétone dans un bain à ultrasons pendant 30 minutes et séchage pendant 4 à 48 heures à température ambiante afin d'éliminer les contaminants organiques présents à sa surface ;
ii. immersion des électrodes dans de l'acide nitrique (HNO₃) à température ambiante et maintient pendant 1 à 100 heures afin d'activer la surface des électrodes ;
iii. lavage des électrodes maintenues dans l'acide nitrique avec de l'eau déionisée jusqu'à obtention d'un pH neutre, puis séchage dans une étuve à une température comprise entre 40 et 60 °C pendant 12 à 36 heures ;
iv. ajout à une solution de 20 mL composée d'un mélange éthanol/eau selon un rapport volumique de 50:50, un monomère de pyrrole à une concentration de 0,001 à 0,5 mol/L, de l'acide mellitique à une concentration de 0,005 à 0,1 mol/L et du chlorure ferrique hexahydraté à une concentration de 0,001 à 0,5 mol/L, puis agitation à température ambiante pendant 30 à 120 minutes;
v. maintien de la solution préparée et de l'électrode en feutre de carbone présentant une surface de 4 × 5 cm² dans un autoclave à une température comprise entre 60 et 180 °C pendant 3 à 12 heures, et réalisation de la polymérisation par une réaction hydrothermale, et
vi. lavage des électrodes composites obtenues après la synthèse avec une solution constituée d'un mélange éthanol/eau selon un rapport volumique de 50:50, puis séchage à une température comprise entre 40 et 90 °C pendant 6 à 24 heures.

4. Procédé de préparation selon la revendication 3, comprenant, à l'étape iv. du procédé, l'ajout, à une solution de 20 mL composée d'un mélange éthanol/eau selon un rapport volumique de 50:50, d'un monomère de pyrrole à une concentration de 0,001 à 0,5 mol/L, d'acide mellitique à une concentration de 0,005 à 0,02 mol/L et de chlorure ferrique hexahydraté à une concentration de 0,001 à 0,5 mol/L, puis l'agitation à température ambiante pendant 30 à 120 minutes.

5. Électrode en feutre de carbone selon la revendication 1 ou la revendication 2, comprenant, dans un volume de 20 mL, un monomère de pyrrole à une concentration de 0,2 mol/L et de l'acide mellitique à une concentration de 0,02 mol/L.
